(19) Europäisches Patentamt
European Patent Office
Office européen des brevets

(11) **EP 3 124 083 B1**

(12) **EUROPEAN PATENT SPECIFICATION**

(45) Date of publication and mention
of the grant of the patent:
**07.02.2024 Bulletin 2024/06**

(21) Application number: **16181979.2**

(22) Date of filing: **29.07.2016**

(51) International Patent Classification (IPC):
**A62B 9/00** (2006.01)      **A62B 18/08** (2006.01)
**A62B 23/02** (2006.01)      **A41D 13/11** (2006.01)

(52) Cooperative Patent Classification (CPC):
**A62B 9/006; A41D 13/11; A62B 18/088;**
**A62B 23/02; H04W 4/80; H04W 76/10**

(54) **SMART MASK, METHOD, SMART MASK AND APPARATUS FOR CALCULATING POLLUTANT ABSORPTION QUANTITY**

INTELLIGENTE MASKE, VERFAHREN, INTELLIGENTE MASKE UND VORRICHTUNG ZUR BERECHNUNG DER SCHADSTOFFABSORPTIONSMENGE

MASQUE INTELLIGENT, PROCÉDÉ, MASQUE INTELLIGENT ET APPAREIL DE CALCUL DE QUANTITÉ D'ABSORPTION DE POLLUANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2015 CN 201510462890**

(43) Date of publication of application:
**01.02.2017 Bulletin 2017/05**

(73) Proprietor: **Xiaomi Inc.**
**Beijing 100085 (CN)**

(72) Inventors:
• **ZHAO, Tong**
**BEIJING, 100085 (CN)**

• **TAO, Qun**
**BEIJING, 100085 (CN)**
• **LIU, Huayijun**
**BEIJING, 100085 (CN)**

(74) Representative: **Cabinet Beau de Loménie**
**158, rue de l'Université**
**75340 Paris Cedex 07 (FR)**

(56) References cited:
**CN-A- 103 815 588      CN-U- 203 873 049**
**US-A1- 2007 130 676    US-A1- 2010 153 023**
**US-A1- 2015 082 914**

## Description

### TECHNICAL FIELD

The present disclosure relates to a field of terminal technology, and more particularly, to a smart mask, a method, smart mask and apparatus for calculating a pollutant absorption quantity.

### BACKGROUND

With the development of technology, pollution caused by industrial production becomes more and more serious. The concentration of pollutants, like PM (Fine Particulate Matter) 2.5, increases year by year, and the frequency of suffering from various respiratory diseases continues to rise. Masks may filter the air into lungs to some extent and prevent air pollutants (such as toxic gases and dust) from entering the lungs effectively, so masks become an important barrier to protect health.
US patent application Publication No. 2015/0082941 discloses a filter simulation system that includes a simulation filter with a sensor such that the volume of air passing through the filter can be determined. There is also a control means with stored data relating to level of protection the simulation filter provides against a simulated toxic substance. In this way the filter simulation system can determine whether a correct simulation filter has been selected by a user and whether or not that filter has expired, in which case a dead or incapacitated result can be indicated. In the event of expiry a simulation end of life service indicator may be activated.
US patent application Publication No. 2010/0153023 discloses a method for determining a service life for a filter, which includes measuring exposure data and calculating a service life esti-mate based on the exposure data. The service life estimate is representative of an estimated exposure time that the filter is exposed to ambient conditions represented by the exposure data before the contaminant passes through the filter at a breakthrough concentration. The method also includes obtaining environmental data and establishing a predicted service life based on the environmental data. The predicted service life is representative of a predicted exposure time that the filter is exposed to the ambient conditions represented by the environmental data before the contaminant passes through the filter at the breakthrough concentration. The method further includes determining the service life for the filter based on a comparison of the estimated and predicted service lives.

### SUMMARY

In order to overcome defects in the related art, embodiments of the present disclosure provide a smart mask, a method, smart mask and apparatus for calculating a pollutant absorption quantity.

According to a first aspect, the invention relates to a smart mask. The smart mask comprises: a main mask body comprising a first opening end and a second opening end, a diameter of the first opening end being smaller than that of the second opening end; a front mask body disposed at the first opening end of the main mask body; and fixing straps disposed at the second opening end of the main mask body; wherein the front mask body is internally provided with a filter and a sensor in sequence, the filter is configured to absorb a pollutant in air entering the front mask body; wherein the fixing straps are configured to fix the smart mask over a nose and mouth of a user via the second opening end to form a closed cavity between the main mask body and, the nose and mouth; the front mask body is internally provided with a processor; wherein, the processor comprises a connecting module configured to establish a connection with a terminal with a connection function; the sensor is configured to record a wearing time of the smart mask; the font mask body is internally further provided with a battery; and the processor further comprises an integrated circuit board at least integrated by a printed circuit board (PCB) and a single-chip microcomputer; characterized in that, wherein based on the connection with the terminal, the smart mask sends the wearing time to the terminal so that the terminal calculates a pollutant gross quantity according to the wearing time, a local air quality index during the wearing time, and a respiratory volume of the user in a first unit time, and obtains a pollutant absorption quantity according to the pollutant gross quantity and a filtration efficiency of a filter of the smart mask, the respiratory volume representing air amount breathed by the user.

The connecting module can include one of a bluetooth module, an infrared module and a near field communication (NFC) module.

According to a second aspect, the invention relates to a method for calculating a pollutant absorption quantity that is applied to a smart mask. The method comprises: receiving a wearing time sent by a smart mask, the wearing time being recorded by a built-in sensor of the smart mask; obtaining a local air quality index corresponding to a location of the terminal during the wearing time; and calculating the pollutant absorption quantity according to the wearing time and the local air quality index, characterized in that, wherein calculating the pollutant absorption quantity according to the wearing time and the local air quality index during the wearing time comprises: obtaining a respiratory volume of a user in a first unit time, the respiratory volume representing air amount breathed by the user; calculating a pollutant gross quantity according to the wearing time, the local air quality index during the wearing time and the respiratory volume of the user in the first unit time; and obtaining the pollutant absorption quantity according to the pollutant gross quantity and a filtration efficiency of a filter of the smart mask.

Before sending the wearing time to the terminal, the method can further include: starting a bluetooth function to establish a connection with the terminal via a bluetooth signal; or starting an NFC function to establish a connection with the terminal via an NFC data channel; or starting an infrared function to establish a connection with the terminal via an infrared signal.

According to a third aspect, the invention relates to an apparatus for calculating a pollutant absorption quantity of a smart mask, the apparatus being a terminal and comprising: a first receiving module configured to receive a wearing time sent by a smart mask, the wearing time being recorded by a built-in sensor of the smart mask; and an obtaining module configured to obtain a local air quality index corresponding to a location of the terminal during the wearing time; characterized in that, a calculating module configured to obtain a respiratory volume of a user in a first unit time; calculate a pollutant gross quantity according to the wearing time, the local air quality index during the wearing time and the respiratory volume of the user in the first unit time; and obtain the pollutant absorption quantity according to the pollutant gross quantity and a filtration efficiency of a filter of the smart mask, the respiratory volume representing air amount breathed by the user.

In a particular embodiment, the step of obtaining the local air quality index during the wearing time includes: obtaining the local air quality index during the wearing time via Internet; or obtaining the local air quality index during the wearing time by a built-in air sensor.

The step of calculating the pollutant absorption quantity according to the wearing time and the local air quality index during the wearing time includes: obtaining a respiratory volume of a user in a first unit time; calculating a pollutant gross quantity according to the wearing time, the local air quality index during the wearing time and the respiratory volume of a user in the first unit time; and obtaining the pollutant absorption quantity according to the pollutant gross quantity and a filtration efficiency of a filter of the smart mask.

The step of obtaining the respiratory volume of a user in the first unit time can include: obtaining respiratory parameters of the user in a second unit time, in which the respiratory parameters include a number of breaths and a respiratory volume with every breath; and calculating the respiratory volume of the user in the first unit time according to the number of breaths in the second unit time and the respiratory volume with every breath.

In a particular embodiment, the step of obtaining the respiratory parameters of the user in the second unit time includes: obtaining a motion state of the user; and determining the respiratory parameters of the user in the second unit time according to the motion state of the user.

In a particular embodiment, the step of obtaining the motion state of the user includes: receiving a physiological parameter of the user sent by a wearable device and determining the motion state of the user according to the physiological parameter; or determining the motion state of the user according to a motion state of a terminal obtained by a built-in gravity sensor; or determining the motion state of the user according to a movement speed of the user detected by a built-in speed sensor.

In a particular embodiment, after calculating the pollutant absorption quantity, the method further includes: uploading the pollutant absorption quantity to a server that determines an absorption quantity ranking list according to pollutant absorption quantities uploaded by other terminals and feeds back the absorption quantity ranking list; and receiving the absorption quantity ranking list fed back by the server.

According to the embodiments of the present disclosure, the technical solution may include the following advantageous effects.

By disposing the filter and the sensor sequentially in the interior of the front mask body of the smart mask, it is possible to absorb pollutants entering the front mask body from the air and to record the wearing time of the smart mask. Based on the wearing time recorded by the smart mask and the local air quality index obtained during the wearing time, the pollutant absorption quantity during wearing the smart mask can be calculated, so as to display the air condition to the user more intuitively.

It is to be understood that both the foregoing general description and the following detailed description are exemplary and explanatory only and the invention is defined by the claims.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

Fig. 1 is a schematic diagram of a smart mask according to an example embodiment.
Fig. 2(A) is a schematic diagram of a main mask body according to an example embodiment.

Fig. 2(B) is a schematic diagram of a front mask body according to an example embodiment.

Fig. 2(C) is a schematic diagram of a front mask body according to an example embodiment.

Fig. 3 is a flow chart of a method for calculating a pollutant absorption quantity according to an example embodiment.

Fig. 4 is a flow chart of a method for calculating a pollutant absorption quantity according to an example embodiment.

Fig. 5 is a flow chart of a method for calculating a pollutant absorption quantity according to an example embodiment.

Fig. 6 is a block diagram of a smart mask according to an example embodiment.

Fig. 7 is a block diagram of an apparatus for calculating a pollutant absorption quantity according to an example embodiment.

Fig. 8 is a block diagram of an apparatus for calculating a pollutant absorption quantity according to an example embodiment.

## DETAILED DESCRIPTION

Reference will now be made in detail to examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

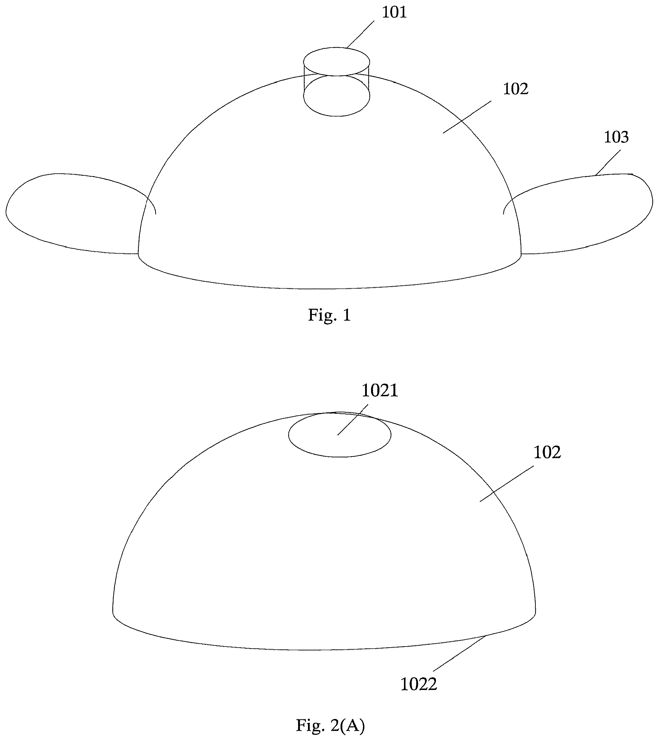

The present disclosure provides a smart mask. Referring to Fig. 1, the smart mask includes: a front mask body 101, a main mask body 102 and fixing straps 103.

Referring to Fig. 2(A), the main mask body 102 includes a first opening end 1021 and a second opening end 1022, in which the diameter of the first opening end 1021 is smaller than that of the second opening end 1022. The front mask body 101 is disposed at the first opening end 1021 of the main mask body and the fixing straps 103 are disposed at the second opening end 1022 of the main mask body.

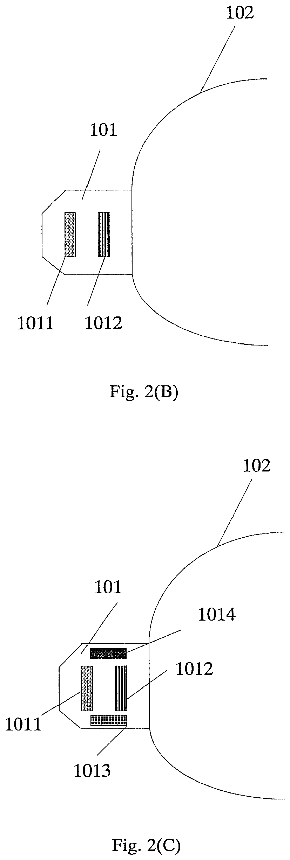

Referring to Fig. 2(B), the front mask body 101 is internally provided with a filter 1011 and a sensor 1012 in sequence, in which the filter 1011 is configured to absorb a pollutant entering the front mask body 101 from air and the sensor 1012 is configured to record a wearing time of the smart mask.

The fixing straps 103 are configured to fix the smart mask over the nose and mouth of a user via the second opening end 1022 to form a closed cavity between the main mask body 102 and the nose and mouth.

In the present disclosure, the sensor 1012 may be a pressure sensor, a touch force sensor, or the like. This specific type of the sensor is not defined.

The front mask body 101 is internally provided with a processor 1013 and a battery 1014. Referring to Fig. 2(C), the processor 1013 and the battery 1014 are disposed at an inner wall of the front mask body 101. The processor 1013 at least includes an integrated circuit board integrated by a printed circuit board (PCB) and a single-chip microcomputer, and a connecting module. The processor 1013 is a control center of the smart mask and is used to: control the sensor to record the wearing time of the smart mask and control the pairing connections of the connecting module and other terminals. The battery 1014 is used to supply power to the processor 1013.

In the present disclosure, the connecting module includes one of a bluetooth module, an infrared module and a near field communication (NFC) module.

By disposing the filter and the sensor in the interior of the front mask body, the smart mask according to the embodiment of the present disclosure may not only absorb pollutants entering the front mask body from the air, but also record the wearing time of the smart mask.

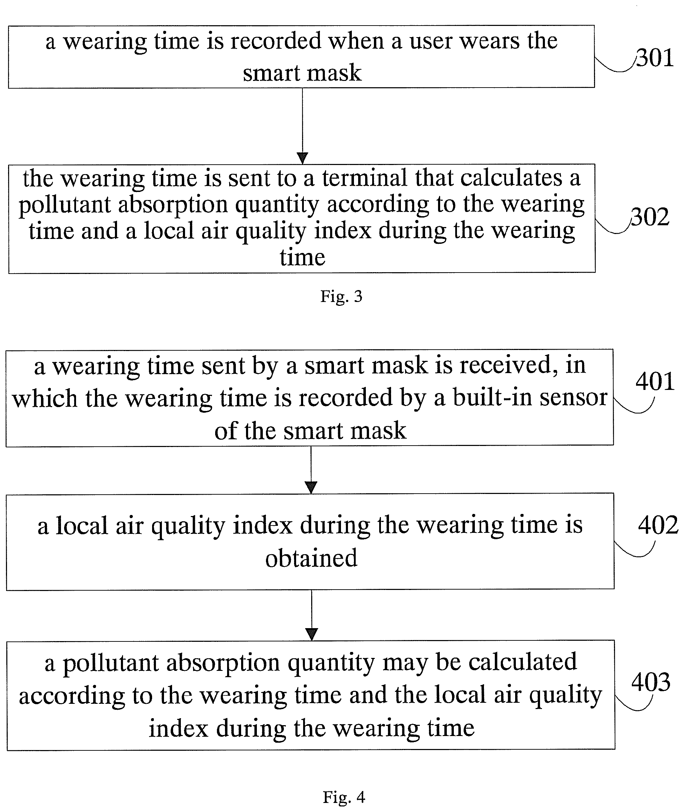

Fig. 3 is a flow chart of a method for calculating a pollutant absorption quantity according to an example embodiment. As shown in Fig. 3, the method is applied to a smart mask and includes the following steps.

In step 301, a wearing time is recorded when a user wears the smart mask.

In step 302, the wearing time is sent to a terminal that calculates a pollutant absorption quantity according to the wearing time and a local air quality index during the wearing time.

By recording the wearing time during which the user wears the smart mask and sending the wearing time to the terminal that calculates the pollutant absorption quantity during wearing the smart mask according to the wearing time and the local air quality index during the wearing time, the method according to the embodiment of the present disclosure may intuitively display the local air condition to the user.

Before sending the wearing time to the terminal, the method further can include: starting a bluetooth function to establish a connection with the terminal via a bluetooth signal; or starting an NFC function to establish a connection with the terminal via an NFC data channel; or starting an infrared function to establish a connection with the terminal via an infrared signal.

Fig. 4 is a flow chart of a method for calculating a pollutant absorption quantity. As shown in Fig. 4, the method is applied to a terminal and includes the following steps.

In step 401, a wearing time sent by a smart mask is received, in which the wearing time is recorded by a built-in sensor of the smart mask.

In step 402, a local air quality index during the wearing time is obtained.

In step 403, a pollutant absorption quantity may be calculated according to the wearing time and the local air quality index during the wearing time.

With the method according to the embodiment of the present disclosure, the pollutant absorption quantity during wearing the smart mask is calculated according to the wearing time recorded by the smart mask and the local air quality index obtained during the wearing time, such that the local air condition may be intuitively displayed to the user.

Before receiving the wearing time sent by the smart mask, the method may further include: starting a bluetooth function to establish a connection with the smart mask via a bluetooth signal; or starting an NFC function to establish a connection with the smart mask via an NFC data channel; or starting an infrared function to establish a connection with the smart mask via an infrared signal.

According to the present invention, the step of obtaining the local air quality index during the wearing time includes: obtaining the local air quality index during the wearing time via the Internet; or obtaining the local air quality index during the wearing time by a built-in air sensor.

The step of calculating the pollutant absorption quantity according to the wearing time and the local air quality index during the wearing time includes: obtaining a respiratory volume of a user in a first unit time; calculating a pollutant gross quantity according to the wearing time, the local air quality index during the wearing time and the respiratory volume of the user in the first unit time; and obtaining the pollutant absorption quantity according to the pollutant gross quantity and a filtration efficiency of a filter of the smart mask.

In the present disclosure, the step of obtaining the respiratory volume of the user in the first unit time includes: obtaining respiratory parameters of the user in a second unit time, in which the respiratory parameters include a number of breaths and a respiratory volume with every breath; and calculating the respiratory volume of the user in the first unit time according to the number of breaths in the second unit time and the respiratory volume with every breath.

In the present disclosure, the step of obtaining the respiratory parameters of the user in the second unit time includes: obtaining a motion state of the user; and determining the respiratory parameters of the user in the second unit time according to the motion state of the user.

In another embodiment of the present disclosure, the step of obtaining the motion state of the user includes: receiving a physiological parameter of the user sent by a wearable device and determining the motion state of the user according to the physiological parameter; or determining the motion state of the user according to a motion state of a terminal obtained by a built-in gravity sensor; or determining the motion state of the user according to a movement speed of the user detected by a built-in speed sensor.

In another embodiment of the present disclosure, after calculating the pollutant absorption quantity, the method further includes: uploading the pollutant absorption quantity to a server that determines an absorption quantity ranking list according to pollutant absorption quantities uploaded by other terminals and feeds back the absorption quantity ranking list; and receiving the absorption quantity ranking list fed back by the server.

The method according to the embodiment of the present disclosure may calculate the pollutant absorption quantity during wearing the smart mask according to the wearing time recorded by the smart mask and the local air quality index obtained during the wearing time, and further may intuitively display the local air condition to the user.

The above alternative technical solutions may form alternative embodiments of the present disclosure in any combinations, which will not be elaborated in detail.

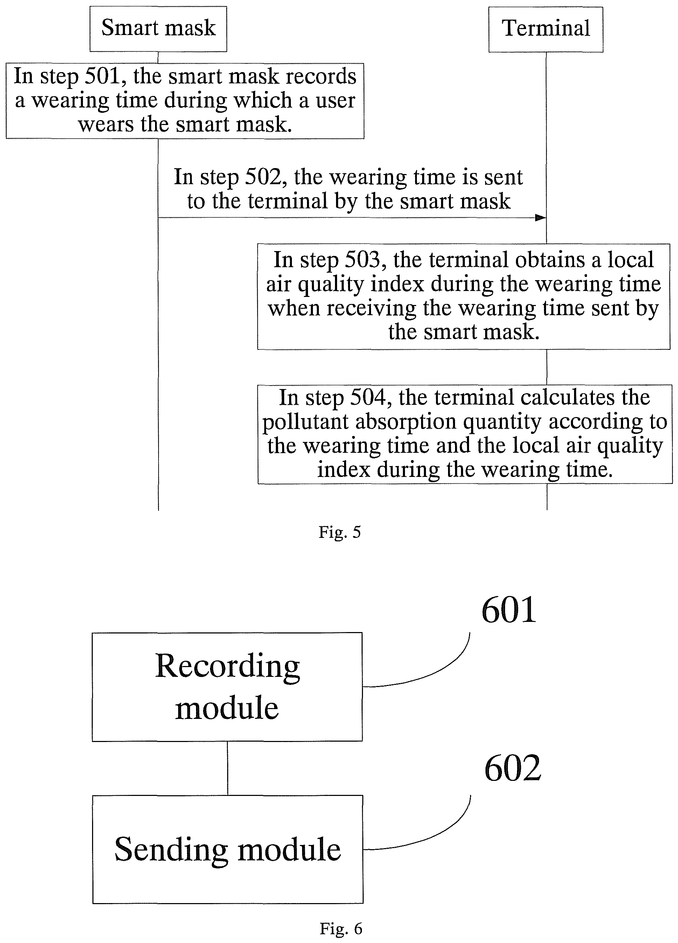

Fig. 5 is a flow chart of a method for calculating a pollutant absorption quantity.

As shown in Fig. 5, the method is applied to a terminal and a smart mask, and includes the following steps.

In step 501, the smart mask records a wearing time during which a user wears the smart mask.

The smart mask is internally provided with a sensor that may be a pressure sensor, a touch force sensor, or the like. If the user wears the smart mask, the fixing straps of the smart mask fix the smart mask over the nose and mouth of the user. In such a case, the nose and mouth touch the sensor, and thus the sensor detects a pressure change and records a time point when the pressure changes. If the user takes off the smart mask, the sensor detects no pressure and records a time point when the pressure becomes zero. In this embodiment, the time period between the time point of the pressure change and the time point when the pressure becomes zero is the wearing time during which the user wears the smart mask. The unit of the wearing time may be an hour, a minute or a second. This example shows the wearing time with an hour as the unit.

In step 502, the wearing time is sent to the terminal by the smart mask.

The processor of the smart mask is internally provided with a connecting module (such as a bluetooth module, a NFC module, an infrared module, or the like) configured to establish a connection with a terminal with a connection function, such as a mobile phone, a tablet computer, or the like.

Regarding the connecting modules of different types, the ways of connecting the smart mask and the terminal include but are not limited to the following ways.

First way: both the smart mask and the terminal start the bluetooth function and find each other in a device discovery stage. Afterwards, the smart mask broadcasts a bluetooth signal, and the terminal establishes a connection with the smart mask according to the bluetooth signal broadcast by the smart mask after receiving it.

Second way: both the smart mask and the terminal start the NFC function; an NFC data channel is established by sending data packages; and the smart mask and the terminal are connected with each other according to the NFC data channel.

Third way: both the smart mask and the terminal start the infrared function and find each other in a device discovery stage. Afterwards, the smart mask sends an infrared signal, and the terminal establishes a connection with the smart mask according to the infrared signal sent by the smart mask after receiving it.

Of course, there are other manners of establishing a connection between the smart mask and the terminal, which will not be elaborated in detail herein.

Based on the connection with the terminal, the smart mask sends the wearing time to the terminal. If it is the bluetooth connection between the smart mask and the terminal, the smart mask may send the wearing time to the terminal through the bluetooth connection; if it is the NFC data channel between the smart mask and the terminal, the smart mask may send the wearing time to the terminal through the NFC data channel; if it is the infrared connection between the smart mask and the terminal, the smart mask may send the wearing time to the terminal through the infrared connection.

In step 503, the terminal obtains a local air quality index during the wearing time when receiving the wearing time sent by the smart mask.

The air quality index represents concentrations of fine particles, $SO_2$, $NO_2$, ozone and CO in air and has a unit of microgramme per cubic meter. When receiving the wearing time sent by the smart mask, the terminal may determine its own location by GPS (Global Positioning System) and hence obtain the local air quality index during the wearing time from the Internet according to the wearing time and the location of the terminal. The terminal may obtain the local air quality index during the wearing time by invoking data released by a local observatory according to the GPS data; the terminal may monitor the all-day air quality index at the location of the terminal via a built-in air sensor, and store the air quality index monitored in a database, such that the terminal may obtain the local air quality index during the wearing time from the database after receiving the wearing time sent by the smart mask.

In step 504, the terminal calculates the pollutant absorption quantity according to the wearing time and the local air quality index during the wearing time.

In practical applications, the pollutant absorption quantity of the smart mask may not only be related to the wearing time and the local air quality index during the wearing time, but also be concerned with the filtration performance of the smart mask. Consequently, several factors, including the wearing time, the local air quality index during the wearing time and the filtration performance of the smart mask, will be taken into consideration together, in order to improve the accuracy of calculating the pollutant absorption quantity of the smart mask. In this embodiment, the filtration performance of the smart mask mainly refers to the filtration efficiency of the filter of the smart mask.

Specifically, the terminal may follow the following steps (1) to (3) to calculate the pollutant absorption quantity according to the wearing time, the local air quality index during the wearing time and the filtration efficiency of the filter of the smart mask.

Step (1): the terminal obtains a respiratory volume of a user in a first unit time.

The first unit time may be an hour, a minute or a second. A second unit time may be a minute or a second. This embodiment illustrates an example where the first unit time is an hour and the second unit time is a minute. The respiratory volume represents air amount breathed by the user in the first time unit and is associated with respiratory parameters of the user in the first time unit. The respiratory parameters include a number of breaths and a respiratory volume with every breath.

The terminal may employ the following steps (1.1) to (1.2) to obtain the respiratory volume of the user in the first unit time.

Step (1.1): the terminal obtains respiratory parameters of the user in the second unit time.

The number of breaths every minute and the respiratory volume with every breath are usually related to a motion state of a user, and the more intense the motion is, the more the number of breaths every minute is and the larger the respiratory volume with every breath is. For example, the number of breaths every minute is 20 and the respiratory volume with every breath is 0.6 liter when the user is jogging; the number of breaths every minute is 15 and the respiratory volume with every breath is 0.5 liter when the user is walking. Thus, the motion state of the user may be obtained first when the terminal obtains the number of breaths in every minute and the respiratory volume with every breath.

Specifically, the terminal may obtain the motion state of the user in but not limited to the following ways.

The wearable device is internally provided with a sensor, and thus may detect different physiological parameters of a user via the built-in sensor. The motion state of the user may be determined according to the detected physiological parameters. Specifically, the wearable device may detect a range of motion and a motion frequency of limbs and trunk of the user, and determine the motion state of the user according to the detected range of motion and the motion frequency. For example, if the wearable device detects that the range of motion is large and the motion frequency is high, it may be determined that the user is engaged in an intense exercise; if the wearable device detects that the range of motion is small and the motion frequency is low, it may be determined that the user is engaged in a gentle exercise. The wearable device may detect the respiratory rate of the user and determine the motion state of the user thereby. For example, if the wearable device detects that the user is short of breath and the respiratory rate is high, it may be determined that the user is engaged in an intense exercise; if the wearable device detects that the user breathes calmly and the respiratory rate is low, it may be determined that the user is engaged in a gentle exercise. Based on the function of the wearable device, if the user wears the wearable device, the terminal may determine the motion state of the user upon receiving the physiological parameters of the user sent by the wearable device.

In another embodiment of the present disclosure, not part of the invention, the terminal is internally provided with a gravity sensor that may detect its own gravity center shift. The terminal may obtain its own motion state according to the gravity center shift detected by the gravity sensor. Usually, the motion state of the terminal may reflect the motion state of the user, so the terminal may determine the motion state of the user according to the gravity center shift detected by the gravity sensor.

In another embodiment of the present disclosure, not part of the inivention, the terminal is internally provided with a speed sensor that may detect a movement speed of the user and determine the motion state of the user thereby. For example, if it is detected that the movement speed of the user is fast, it may be determined that the user is engaged in an intense exercise, such as running, playing badminton, or the like; if it is detected that the movement speed of the user is slow, it may be determined that the user is engaged in a gentle exercise, like walking.

Usually, the number of breaths every minute and the respiratory volume with every breath are certain in different motion states, so the terminal may determine the number of breaths every minute and the respiratory volume with every breath according to the motion state of the user. Table 1 shows the respiratory parameters of the user in different motion states.

Table 1

| Motion state | number of breaths every minute | Respiratory volume with every breath (liter) |
| --- | --- | --- |
| Jogging | 20 | 0.6 |
| Walking | 15 | 0.5 |
| Running | 25 | 0.8 |

According to the respiratory parameters of the user listed in Table 1, if the motion state of the user is walking, it can be known that the number of breaths every minute is 15 and the respiratory volume with every breath is 0.5 liter.

Step (1.2) the terminal calculates the respiratory volume of the user in the first unit time according to the number of breaths in the second unit time and the respiratory volume with every breath of the user.

The respiratory volume every hour may be calculated by formula (I) according to the number of breaths in the second unit time and the respiratory volume with every breath.

Formula (I): respiratory volume every hour (liter)= respiratory volume with every breath (liter) * number of breaths every minute * 60

It shall be noted that the pollutant absorption quantity is usually calculated with cubic meter as the unit. For the convenience of subsequent calculations, this embodiment may convert the unit of the respiratory volume every hour from liter to cubic meter, in which case, 0.001 is multiplied based on formula (I) and thus formula (II) is obtained.

Formula (II): respiratory volume every hour ($m^3$) = respiratory volume with every breath (liter) * number of breaths every minute * 60 * 0.001

Take Table 1 for example. If the terminal determines that the user is jogging, the number of breaths every minute is 20 and the respiratory volume with every breath is 0.6 liter, it may be calculated that the respiratory volume every hour = respiratory volume with every breath * number of breaths every minute * 60 * 0.001 = 0.6 * 20 * 60 * 0.001 = 0.72 $m^3$.

Step (2): the terminal calculates a pollutant gross quantity according to the wearing time, the local air quality index during the wearing time and the respiratory volume of the user in the first unit time.

The pollutant gross quantity may be calculated by formula (III) according to the wearing time, the local air quality index during the wearing time and the respiratory volume of the user in the first unit time.

Formula (III): pollutant gross quantity ($m^3$) = wearing time (hour) * air quality index ($\mu g/m^3$) * respiratory volume every hour ($m^3$).

For example, if the user wears the smart mask for 2 hours, the air quality index is $0.5 \mu g/m^3$ and the respiratory volume with every breath is 0.8 $m^3$, it may be calculated that the pollutant gross quantity = wearing time * air quality index * respiratory volume every hour = 2 * 0.5 $\mu g/m^3$ * 0.8 $m^3$ = 0.8 $\mu g$.

Step (3): the terminal obtains the pollutant absorption quantity according to the pollutant gross quantity and the filtration efficiency of the filter of the smart mask.

The pollutant absorption quantity may be calculated by formula (IV) according to the pollutant gross quantity and the filtration efficiency of the filter of the smart mask.

Formula (IV): pollutant absorption quantity ($\mu g$) = pollutant gross quantity ($\mu g$) * filtration efficiency of filter (%).

For example, if the pollutant gross quantity is $0.8 \mu g$ and the filtration efficiency of the filter is 80%, it may be calculated that the pollutant absorption quantity = 0.8 $\mu g$ * 80% = 0.64 $\mu g$.

In order to intuitively display the pollutant absorption capacity of the smart mask to the user, after calculating the pollutant absorption quantity, the terminal uploads the pollutant absorption quantity to a server; the server determines an absorption quantity ranking list according to pollutant absorption quantities uploaded by other terminals and sends the absorption quantity ranking list to the terminal. The terminal displays the absorption quantity ranking list to the user after receiving it from the server, such that the user may have an intuitive understanding of the absorption performance of the smart mask and the local air quality condition.

The method according to the embodiment of the present disclosure calculates the pollutant absorption quantity during wearing the smart mask according to the wearing time recorded by the smart mask and the local air quality index obtained during the wearing time, and hence may intuitively display the local air condition to the user.

Fig. 6 is a block diagram of a smart mask according to an example embodiment. Referring to Fig. 6, the smart mask includes: a recording module 601 and a sending module 602.

The recording module 601 is configured to record a wearing time during which a user wears the smart mask; the sending module 602 is configured to send the wearing time to a terminal that calculates a pollutant absorption quantity according to the wearing time and a local air quality index during the wearing time.

According to the present invention, the smart mask further includes a connecting module.

The connecting module is configured to start a bluetooth function to establish a connection with the terminal via a bluetooth signal; or the connecting module is configured to start an NFC function to establish a connection with the terminal via an NFC data channel; or the connecting module is configured to start an infrared function to establish a connection with the terminal via an infrared signal.

With the smart mask according to the present disclosure, by recording the wearing time during which the user are wearing the smart mask and sending the wearing time to the terminal that calculates the pollutant absorption quantity according to the wearing time and the local air quality index during the wearing time, it is possible to intuitively display the local air condition to the user.

Regarding the smart mask in this embodiment, the specific ways of implementing operations by each module have been illustrated in the method, which will not be further elaborated herein.

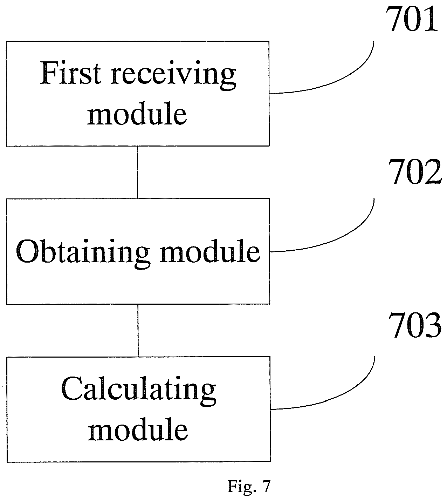

Fig. 7 is a block diagram of an apparatus for calculating a pollutant absorption quantity according to an example embodiment. Referring to Fig. 7, the apparatus includes: a first receiving module 701, an obtaining module 702 and a calculating module 703.

The first receiving module 701 is configured to receive a wearing time sent by a smart mask, in which the wearing time is recorded by a built-in sensor of the smart mask. The obtaining module 702 is configured to obtain a local air quality index during the wearing time. The calculating module 703 is configured to calculate a pollutant absorption quantity according to the wearing time and the local air quality index during the wearing time.

The apparatus further includes a connecting module.

The connecting module is configured to start a bluetooth function to establish a connection with the smart mask via a bluetooth signal; or the connecting module is configured to start an NFC function to establish a connection with the smart mask via an NFC data channel; or the connecting module is configured to start an infrared function to establish a connection with the smart mask via an infrared signal.

The obtaining module 702 is configured to obtain the local air quality index during the wearing time via the Internet, or the obtaining module 702 is configured to obtain the local air quality index during the wearing time by a built-in air sensor.

The calculating module 703 is configured to obtain a respiratory volume of a user in a first unit time; to calculate a pollutant gross quantity according to the wearing time, the local air quality index during the wearing time and the respiratory volume of the user in the first unit time; and to obtain the pollutant absorption quantity according to the pollutant gross quantity and a filtration efficiency of a filter of the smart mask.

The calculating module 703 is configured to obtain respiratory parameters of the user in a second unit time, in which the respiratory parameters comprise a number of breaths and a respiratory volume with every breath; and to calculate the respiratory volume of the user in the first unit time according to the number of breaths in the second unit time and the respiratory volume with every breath.

In the present disclosure, the calculating module 703 is configured to obtain a motion state of the user; and to determine the respiratory parameters of the user in the second unit time according to the motion state of the user.

In of the present disclosure, the calculating module 703 is configured to receive a physiological parameter of the user sent by a wearable device and to determine the motion state of the user according to the physiological parameter; or the calculating module is specifically configured to determine the motion state of the user according to a motion state of a terminal obtained by a built-in gravity sensor; or the calculating module is specifically configured to determine the motion state of the user according to a movement speed of the user detected by a built-in speed sensor.

The apparatus may further include: an uploading module and a second receiving module.

The uploading module is configured to upload the pollutant absorption quantity to a server that determines an absorption quantity ranking list according to pollutant absorption quantities uploaded by other terminals and feeds back the absorption quantity ranking list. The second receiving module is configured to receive the absorption quantity ranking list fed back by the server.

The apparatus according to the invention calculates the pollutant absorption quantity during wearing the smart mask according to the wearing time recorded by the smart mask and the local air quality index obtained during the wearing time, and hence may intuitively display the local air condition to the user.

Regarding the apparatus, the specific ways of implementing operations by each module have been illustrated above, which will not be further elaborated herein.

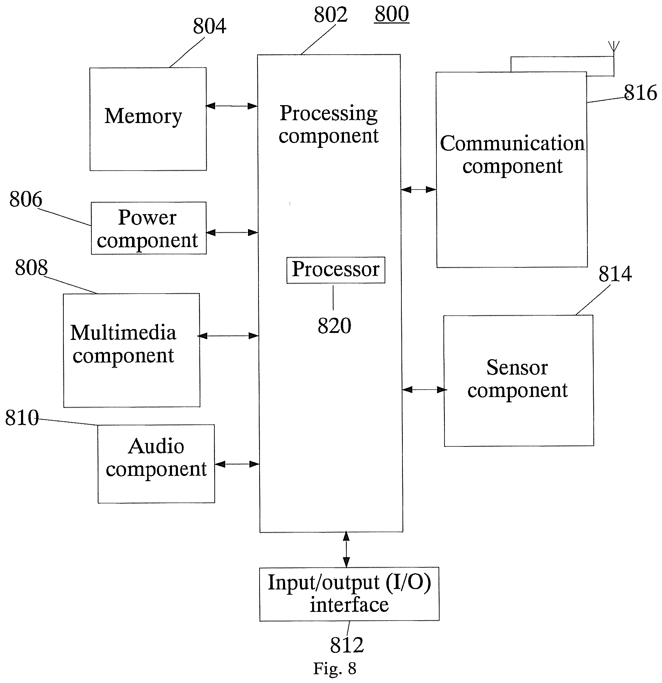

Fig. 8 is a block diagram of an apparatus 800 for calculating a pollutant absorption quantity according to an example embodiment. For example, the apparatus 800 may be a mobile phone, a computer, a digital broadcasting terminal, a message sending and receiving equipment, a game controller, a tablet device, a medical device, a fitness equipment, a personal digital assistant or the like.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of a mobile terminal, causes the mobile terminal to perform a method for calculating a pollutant absorption quantity. The method includes: receiving a wearing time sent by a smart mask, the wearing time being recorded by a built-in sensor of the smart mask; obtaining a local air quality index during the wearing time; and calculating the pollutant absorption quantity according to the wearing time and the local air quality index during the wearing time.

In the present disclosure, before receiving the wearing time sent by the smart mask, the method may further include: starting a bluetooth function to establish a connection with the smart mask via a bluetooth signal; or starting an NFC function to establish a connection with the smart mask via an NFC data channel; or starting an infrared function to establish a connection with the smart mask via an infrared signal.

The step of obtaining the local air quality index during the wearing time includes: obtaining the local air quality index during the wearing time via the Internet; or obtaining the local air quality index during the wearing time by a built-in air sensor.

The step of calculating the pollutant absorption quantity according to the wearing time and the local air quality index during the wearing time includes: obtaining a respiratory volume of a user in a first unit time; calculating a pollutant gross quantity according to the wearing time, the local air quality index during the wearing time and the respiratory volume of the user in the first unit time; and obtaining the pollutant absorption quantity according to the pollutant gross quantity and a filtration efficiency of a filter of the smart mask.

The step of obtaining the respiratory volume of the user in the first unit time includes: obtaining respiratory parameters of the user in a second unit time, in which the respiratory parameters comprise a number of breaths and a respiratory volume with every breath; and calculating the respiratory volume of the user in the first unit time according to the number of breaths in the second unit time and the respiratory volume with every breath.

In another embodiment of the present disclosure, the step of obtaining the respiratory parameters of the user in the second unit time includes: obtaining a motion state of the user; and determining the respiratory parameters of the user in the second unit time according to the motion state of the user.

In another embodiment of the present disclosure, the step of obtaining the motion state of the user includes: receiving a physiological parameter of the user sent by a wearable device and determining the motion state of the user according to the physiological parameter; or determining the motion state of the user according to a motion state of a terminal obtained by a built-in gravity sensor; or determining the motion state of the user according to a movement speed of the user detected by a built-in speed sensor.

In another embodiment of the present disclosure, after calculating the pollutant absorption quantity, the method further includes: uploading the pollutant absorption quantity to a server that determines an absorption quantity ranking list according to pollutant absorption quantities uploaded by other terminals and feeds back the absorption quantity ranking list; and receiving the absorption quantity ranking list fed back by the server.

By calculating the pollutant absorption quantity during wearing the smart mask according to the wearing time recorded by the smart mask and the local air quality index obtained during the wearing time, the non-transitory computer-readable storage medium according to the embodiment of the present disclosure may intuitively display the local air condition to the user.

## Claims

1.   A method for calculating a pollutant absorption quantity of a smart mask, carried out by a terminal, the method comprising:

   receiving (401) a wearing time sent by a smart mask, the wearing time being recorded by a built-in sensor of the smart mask;
   obtaining (402, 503) a local air quality index corresponding to a location of the terminal during the wearing time; and
   calculating (403, 504) the pollutant absorption quantity according to the wearing time and the local air quality index,
   **characterized in that**,
   wherein calculating (403, 504) the pollutant absorption quantity according to the wearing time and the local air quality index during the wearing time comprises:

      obtaining a respiratory volume of a user in a first unit time, the respiratory volume representing air amount breathed by the user;
      calculating a pollutant gross quantity according to the wearing time, the local air quality index during the wearing time and the respiratory volume of the user in the first unit time; and
      obtaining the pollutant absorption quantity according to the pollutant gross quantity and a filtration efficiency of a filter of the smart mask.

2.   The method according to claim 1, wherein obtaining (402, 503) the local air quality index during the wearing time comprises:

   obtaining the local air quality index during the wearing time via Internet; or
   obtaining the local air quality index during the wearing time by a built-in air sensor.

3.   The method according to claim 1, wherein obtaining the respiratory volume of the user in the first unit time comprises:

   obtaining respiratory parameters of the user in a second unit time, wherein the respiratory parameters comprise a number of breaths and a respiratory volume with every breath; and
   calculating the respiratory volume of the user in the first unit time according to the number of breaths in the second unit time and the respiratory volume with every breath.

4.   The method according to claim 3, wherein obtaining the respiratory parameters of the user in the second unit time comprises:

obtaining a motion state of the user; and
determining the respiratory parameters of the user in the second unit time according to the motion state of the user.

5. The method according to claim 4, wherein obtaining the motion state of the user comprises:

receiving a physiological parameter of the user sent by a wearable device and determining the motion state of the user according to the physiological parameter; or
determining the motion state of the user according to a motion state of a terminal obtained by a built-in gravity sensor; or
determining the motion state of the user according to a movement speed of the user detected by a built-in speed sensor.

6. The method according to any one of claims 1 to 5, after calculating (403, 504) the pollutant absorption quantity, further comprising:

uploading the pollutant absorption quantity to a server, such that the server determines an absorption quantity ranking list according to pollutant absorption quantities uploaded by other terminals and feeds back the absorption quantity ranking list; and
receiving the absorption quantity ranking list fed back by the server.

7. A smart mask, comprising:

a main mask body (102) comprising a first opening end (1021) and a second opening end (1022), a diameter of the first opening end (1021) being smaller than that of the second opening end (1022);
a front mask body (101) disposed at the first opening end (1021) of the main mask body (102); and
fixing straps (103) disposed at the second opening end (1022) of the main mask body (102);
wherein the front mask body (101) is internally provided with a filter (1011) and a sensor (1012) in sequence, the filter (1011) is configured to absorb a pollutant in air entering the front mask body (101);
wherein the fixing straps (103) are configured to fix the smart mask over a nose and mouth of a user via the second opening end (1022) to form a closed cavity between the main mask body (102) and, the nose and mouth;
the front mask body (101) is internally provided with a processor (1013);
wherein, the processor (1013) comprises a connecting module configured to establish a connection with a terminal with a connection function;
the sensor (1012) is configured to record a wearing time of the smart mask;
the font mask body (101) is internally further provided with a battery (1014); and
the processor (1013) further comprises an integrated circuit board at least integrated by a printed circuit board (PCB) and a single-chip microcomputer;
wherein based on the connection with the terminal, the smart mask is configured to send the wearing time to the terminal so that the terminal calculates a pollutant gross quantity according to the wearing time, a local air quality index during the wearing time, and a respiratory volume of the user in a first unit time, and obtains a pollutant absorption quantity according to the pollutant gross quantity and a filtration efficiency of a filter of the smart mask, the respiratory volume representing air amount breathed by the user.

8. An apparatus for calculating a pollutant absorption quantity of a smart mask, the apparatus being a terminal and comprising:

a first receiving module (701) configured to receive a wearing time sent by a smart mask, the wearing time being recorded by a built-in sensor of the smart mask; and
an obtaining module (702) configured to obtain a local air quality index corresponding to a location of the terminal during the wearing time;
a calculating module (703) configured to

- obtain a respiratory volume of a user in a first unit time;
- calculate a pollutant gross quantity according to the wearing time, the local air quality index during the wearing time and the respiratory volume of the user in the first unit time; and
- obtain the pollutant absorption quantity according to the pollutant gross quantity and a filtration efficiency of a filter of the smart mask, the respiratory volume representing air amount breathed by the user.

**Patentansprüche**

1. Verfahren zum Berechnen einer Schadstoff-Absorptionsmenge einer intelligenten Maske, das von einem Endgerät ausgeführt wird, wobei das Verfahren umfasst:

   Empfangen (401) einer von einer intelligenten Maske gesendeten Tragezeit, wobei die Tragezeit von einem eingebauten Sensor der intelligenten Maske aufgezeichnet wird,
   Erlangen (402, 503) eines lokalen Luftqualitätsindex, der einem Standort des Endgeräts während der Tragezeit entspricht, und
   Berechnen (403, 504) der Schadstoff-Absorptionsmenge anhand der Tragezeit und des lokalen Luftqualitätsindex,
   **dadurch gekennzeichnet, dass**,
   wobei das Berechnen (403, 504) der Schadstoff-Absorptionsmenge anhand der Tragezeit und des lokalen Luftqualitätsindex während der Tragezeit umfasst:

   Erlangen eines Atemvolumens eines Benutzers in einer ersten Zeiteinheit, wobei das Atemvolumen eine von dem Benutzer geatmete Luftmenge darstellt,
   Berechnen einer Schadstoff-Bruttomenge anhand der Tragezeit, des lokalen Luftqualitätsindex während der Tragezeit und des Atemvolumens des Benutzers in der ersten Zeiteinheit, und
   Erlangen der Schadstoff-Absorptionsmenge anhand der Schadstoff-Bruttomenge und einer Filtrationseffizienz eines Filters der intelligenten Maske.

2. Verfahren nach Anspruch 1, wobei das Erlangen (402, 503) des lokalen Luftqualitätsindex während der Tragezeit umfasst:

   Erlangen des lokalen Luftqualitätsindex während der Tragezeit über das Internet, oder
   Erlangen des lokalen Luftqualitätsindex während der Tragezeit durch einen eingebauten Luftsensor.

3. Verfahren nach Anspruch 1, wobei das Erlangen des Atemvolumens des Benutzers in der ersten Zeiteinheit umfasst:

   Erlangen von Atmungsparametern des Benutzers in einer zweiten Zeiteinheit, wobei die Atmungsparameter eine Anzahl von Atemzügen und ein Atemvolumen bei jedem Atemzug umfassen, und
   Berechnen des Atemvolumens des Benutzers in der ersten Zeiteinheit anhand der Anzahl an Atemzügen in der zweiten Zeiteinheit und des Atemvolumens bei jedem Atemzug.

4. Verfahren nach Anspruch 3, wobei das Erlangen der Atmungsparameter des Benutzers in der zweiten Zeiteinheit umfasst:

   Erlangen eines Bewegungszustands des Benutzers, und
   Bestimmen der Atmungsparameter des Benutzers in der zweiten Zeiteinheit anhand des Bewegungszustands des Benutzers.

5. Verfahren nach Anspruch 4, wobei das Erlangen des Bewegungszustands des Benutzers umfasst:

   Empfangen eines physiologischen Parameters des Benutzers, der von einem tragbaren Gerät gesendet wird, und Bestimmen des Bewegungszustands des Benutzers anhand des physiologischen Parameters, oder
   Bestimmen des Bewegungszustands des Benutzers anhand eines Bewegungszustands eines Endgeräts, der durch einen eingebauten Schwerkraftsensor erlangt wird, oder
   Bestimmen des Bewegungszustands des Benutzers anhand einer Bewegungsgeschwindigkeit des Benutzers, die von einem eingebauten Geschwindigkeitssensor erfasst wird.

6. Verfahren nach einem der Ansprüche 1 bis 5 nach Berechnen (403, 504) der Schadstoff-Absorptionsmenge, ferner umfassend:

   Hochladen der Schadstoff-Absorptionsmenge auf einen Server, sodass der Server eine Absorptionsmengen-Rangliste anhand der von anderen Endgeräten hochgeladenen Schadstoff-Absorptionsmengen bestimmt und die Absorptionsmengen-Rangliste rückmeldet, und
   Empfangen der vom Server rückgemeldeten Absorptionsmengen-Rangliste.

**7.** Intelligente Maske, umfassend:

einen Hauptmaskenkörper (102), der ein erstes Öffnungsende (1021) und ein zweites Öffnungsende (1022) umfasst, wobei ein Durchmesser des ersten Öffnungsendes (1021) kleiner als der des zweiten Öffnungsendes (1022) ist,

einen vorderen Maskenkörper (101), der an dem ersten Öffnungsende (1021) des Hauptmaskenkörpers (102) angeordnet ist, und

Befestigungsbänder (103), die an dem zweiten Öffnungsende (1022) des Hauptmaskenkörpers (102) angeordnet sind,

wobei der vordere Maskenkörper (101) innen nacheinander mit einem Filter (1011) und einem Sensor (1012) versehen ist, wobei der Filter (1011) dazu ausgestaltet ist, einen Schadstoff in der in den vorderen Maskenkörper (101) eintretenden Luft zu absorbieren,

wobei die Befestigungsbänder (103) dazu ausgestaltet sind, die intelligente Maske über das zweite Öffnungsende (1022) über einer Nase und einem Mund eines Benutzers zu befestigen, um einen geschlossenen Hohlraum zwischen dem Hauptmaskenkörper (102) und der Nase und dem Mund zu bilden,

der vordere Maskenkörper (101) innen mit einem Prozessor (1013) versehen ist,

wobei der Prozessor (1013) ein Verbindungsmodul umfasst, das dazu ausgestaltet ist, eine Verbindung mit einem Endgerät mit einer Verbindungsfunktion herzustellen,

der Sensor (1012) dazu ausgestaltet ist, eine Tragezeit der intelligenten Maske aufzuzeichnen,

der vordere Maskenkörper (101) ferner innen mit einer Batterie (1014) versehen ist, und

der Prozessor (1013) ferner eine integrierte Leiterplatte umfasst, die zumindest durch eine Platine (Printed Circuit Board - PCB) und einen Einzelchip-Mikrocomputer integriert ist,

wobei basierend auf der Verbindung mit dem Endgerät die intelligente Maske dazu ausgestaltet ist, die Tragezeit an das Endgerät zu senden, sodass das Endgerät eine Schadstoff-Bruttomenge anhand der Tragezeit, eines lokalen Luftqualitätsindex während der Tragezeit und eines Atemvolumens des Benutzers in einer ersten Zeiteinheit berechnet und eine Schadstoff-Absorptionsmenge anhand der Schadstoff-Bruttomenge und einer Filtrationseffizienz eines Filters der intelligenten Maske erlangt, wobei das Atemvolumen eine von dem Benutzer geatmete Luftmenge darstellt.

**8.** Vorrichtung zum Berechnen einer Schadstoff-Absorptionsmenge einer intelligenten Maske, wobei die Vorrichtung ein Endgerät ist und umfasst:

ein erstes Empfangsmodul (701), das dazu ausgestaltet ist, eine von einer intelligenten Maske gesendete Tragezeit zu empfangen, wobei die Tragezeit von einem eingebauten Sensor der intelligenten Maske aufgezeichnet wird, und

ein Erlangungsmodul (702), das dazu ausgestaltet ist, einen lokalen Luftqualitätsindex zu erlangen, der einem Standort des Endgeräts während der Tragezeit entspricht,

ein Rechenmodul (703), das ausgestaltet ist zum

- Erlangen eines Atemvolumens eines Benutzers in einer ersten Zeiteinheit,
- Berechnen einer Schadstoff-Bruttomenge anhand der Tragezeit, des lokalen Luftqualitätsindex während der Tragezeit und des Atemvolumens des Benutzers in der ersten Zeiteinheit, und
- Erlangen der Schadstoff-Absorptionsmenge anhand der Schadstoff-Bruttomenge und einer Filtrationseffizienz eines Filters der intelligenten Maske, wobei das Atemvolumen die von dem Benutzer geatmete Luftmenge darstellt.

**Revendications**

**1.** Procédé pour calculer la quantité d'absorption de polluants d'un masque intelligent, réalisé par un terminal, le procédé comprenant :

la réception (401) du temps de port d'un masque intelligent, le temps de port étant enregistré par un capteur intégré du masque intelligent ;

l'obtention (402, 503) de l'indice de qualité de l'air local correspondant à l'emplacement du terminal durant le temps de port ; et

le calcul (403, 504) de la quantité d'absorption de polluants en fonction du temps de port et de l'indice de qualité de l'air local,

**caractérisé en ce que**

le calcul (403, 504) de la quantité d'absorption de polluants en fonction du temps de port et de l'indice de qualité de l'air local durant le temps de port comprend :

l'obtention du volume respiratoire de l'utilisateur pendant une première période unitaire, le volume respiratoire représentant la quantité d'air respirée par l'utilisateur ;

le calcul de la quantité brute de polluants en fonction du temps de port, de l'indice de qualité de l'air durant le temps de port et du volume respiratoire de l'utilisateur pendant la première période unitaire ; et

l'obtention de la quantité d'absorption de polluants en fonction de la quantité de brute de polluants et de l'efficacité de filtration du filtre du masque intelligent.

2. Procédé selon la revendication 1, dans lequel l'obtention (402, 503) de l'indice de qualité de l'air local durant le temps de port comprend :

l'obtention de l'indice de qualité de l'air local durant le temps de port via Internet ; ou
l'obtention de l'indice de qualité de l'air local durant le temps de port par un capteur d'air intégré.

3. Procédé selon la revendication 1, dans lequel l'obtention du volume respiratoire de l'utilisateur pendant la première période unitaire comprend :

l'obtention de paramètres respiratoires de l'utilisateur pendant une deuxième période unitaire, lesquels paramètres respiratoires comprennent le nombre de respirations et le volume respiratoire pour chaque respiration ; et
le calcul du volume respiratoire de l'utilisateur pendant la première période unitaire en fonction du nombre de respirations pendant la deuxième période unitaire et du volume respiratoire pour chaque respiration.

4. Procédé selon la revendication 3, dans lequel l'obtention des paramètres respiratoires de l'utilisateur pendant la deuxième période unitaire comprend :

l'obtention de l'état de mouvement de l'utilisateur ; et
la détermination des paramètres respiratoires de l'utilisateur pendant la deuxième période unitaire en fonction de l'état de mouvement de l'utilisateur.

5. Procédé selon la revendication 4, dans lequel l'obtention de l'état de mouvement de l'utilisateur comprend :

la réception d'un paramètre physiologique de l'utilisateur envoyé par un dispositif connecté et la détermination de l'état de mouvement de l'utilisateur en fonction du paramètre physiologique ; ou
la détermination de l'état de mouvement de l'utilisateur en fonction de l'état de mouvement d'un terminal obtenu au moyen d'un capteur de gravité intégré ; ou
la détermination de l'état de mouvement de l'utilisateur en fonction de la vitesse de mouvement de l'utilisateur détectée au moyen d'un capteur de vitesse intégré.

6. Procédé selon l'une quelconque des revendications 1 à 5, après le calcul (403, 504) de la quantité d'absorption de polluants, comprenant en outre :

le téléchargement ascendant de la quantité d'absorption de polluants sur un serveur, de façon que le serveur détermine une liste de classement de quantité d'absorption en fonction des quantités d'absorption de polluants téléchargées par d'autres terminaux et renvoie la liste de classement de quantité d'absorption ; et
la réception de la liste de classement de quantité d'absorption renvoyée par le serveur.

7. Masque intelligent comprenant :

un corps de masque principal (102) comprenant une première extrémité d'ouverture (1021) et une deuxième extrémité d'ouverture (1022), le diamètre de la première extrémité d'ouverture (1021) étant inférieur à celui de la deuxième extrémité d'ouverture (1022) ;
un corps de masque avant (101) disposé au niveau de la première extrémité d'ouverture (1021) du corps de masque principal (102) ; et
des courroies de fixation (103) disposées au niveau de la deuxième extrémité d'ouverture (1022) du corps de masque principal (102) ;

dans lequel le corps de masque avant (101) est doté en interne d'un filtre (1011) et d'un capteur (1012) en séquence, le filtre (1011) est configuré pour absorber un polluant dans l'air entrant dans le corps de masque avant (101) ;

dans lequel les courroies de fixation (103) sont configurées pour fixer le masque intelligent sur le nez et la bouche d'un utilisateur via la deuxième extrémité d'ouverture (1022) pour former une cavité fermée entre le corps de masque principal (102) et le nez et la bouche ;

le corps de masque avant (101) est doté en interne d'un processeur (1013) ;

dans lequel le processeur (1013) comprend un module de connexion configuré pour établir une connexion avec un terminal avec une fonction de connexion ;

le capteur (1012) est configuré pour enregistrer le temps de port du masque intelligent ;

le corps de masque avant (101) est doté en outre en interne d'une batterie (1014) ; et

le processeur (1013) comprend en outre une carte de circuit intégré qui est au moins intégrée par une carte de circuit imprimé (CI) et un microordinateur monopuce ;

dans lequel, sur la base de la connexion avec le terminal, le masque intelligent est configuré pour envoyer le temps de port au terminal de façon que le terminal calcule la quantité brute de polluants en fonction du temps de port ; de l'indice de qualité de l'air local durant le temps de port, et du volume respiratoire de l'utilisateur pendant une première période unitaire, et obtienne la quantité d'absorption de polluants en fonction de la quantité brute de polluants et de l'efficacité de filtration du filtre du masque intelligent, le volume respiratoire représentant la quantité d'air respiré par l'utilisateur.

8.  Appareil pour calculer la quantité d'absorption de polluants d'un masque intelligent, l'appareil étant un terminal et comprenant :

un premier module de réception (701) configuré pour recevoir le temps de port envoyé par un masque intelligent, le temps de port étant enregistré par un capteur intégré du masque intelligent ; et

un module d'obtention (702) configuré pour obtenir l'indice de qualité de l'air local correspondant à l'emplacement du terminal durant le temps de port ;

un module de calcul (703) configuré pour

- obtenir le volume respiratoire d'un utilisateur pendant une première période unitaire ;
- calculer la quantité brute de polluants en fonction du temps de port, de l'indice de qualité de l'air local durant le temps de port et du volume respiratoire de l'utilisateur pendant la première période unitaire ; et
- obtenir la quantité d'absorption de polluants en fonction de la quantité brute de polluants et de l'efficacité de filtration du filtre du masque intelligent, le volume respiratoire représentant la quantité d'air respiré par l'utilisateur.

101

102

103

Fig. 1

1021

102

1022

Fig. 2(A)

102

101

1011    1012

Fig. 2(B)

102

101

1014

1012

1011

1013

Fig. 2(C)

a wearing time is recorded when a user wears the smart mask ⟍⟋301

the wearing time is sent to a terminal that calculates a pollutant absorption quantity according to the wearing time and a local air quality index during the wearing time ⟍⟋302

Fig. 3

a wearing time sent by a smart mask is received, in which the wearing time is recorded by a built-in sensor of the smart mask ⟍⟋401

a local air quality index during the wearing time is obtained ⟍⟋402

a pollutant absorption quantity may be calculated according to the wearing time and the local air quality index during the wearing time ⟍⟋403

Fig. 4

| Smart mask | Terminal |
|---|---|

In step 501, the smart mask records a wearing time during which a user wears the smart mask.

In step 502, the wearing time is sent to the terminal by the smart mask

In step 503, the terminal obtains a local air quality index during the wearing time when receiving the wearing time sent by the smart mask.

In step 504, the terminal calculates the pollutant absorption quantity according to the wearing time and the local air quality index during the wearing time.

Fig. 5

601

Recording module

602

Sending module

Fig. 6

Fig. 7

21

Fig. 8

**EP 3 124 083 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150082941

- US 20100153023